# EUROPÄISCHE PATENTANMELDUNG

(11) **EP 1 349 095 A1**
(43) Veröffentlichungstag der Anmeldung: **01.10.2003**
(21) Anmeldenummer: 02021012.6
(22) Anmeldetag: 20.09.2002
(51) Int. Cl.: G06F 17/60

(54) **Verfahren zum automatischen Erstellen und Verarbeiten von Dokumenten**

(30) Priorität: 26.03.2002 EP 02006887
(71) Anmelder: Bertelsmann Direkt Marketing Fabrik GmbH, 33310 Gütersloh (DE)
(72) Erfinder: Schmedtmann, Markus, 33619 Bielefeld (DE); Absolon, Michael, 30171 Hannover (DE)
(74) Vertreter: Cohausz & Florack

(57) **Zusammenfassung**

Verfahren zum automatischen Erstellen und Verarbeiten von Dokumenten, bei dem Dokumente mit Hilfe von Kundendaten automatisch personalisiert werden, bei dem Bonifikationsdaten automatisch auf den Dokumenten gespeichert werden, bei dem die Dokumente automatisch an Kunden versendet werden, und bei dem eingehende Dokumente automatisch erfasst werden, wobei die eingehenden Dokumente eingelöste Bonifikationen repräsentieren. Ein automatisches Protokollieren von Rabattaktionen wird dadurch gewährleistet, dass die auf den Dokumenten gespeicherten Bonifikationsdaten automatisch erfasst werden, dass die erfassten Bonifikationsdaten den Kundendaten zugeordnet werden, und dass die Bonifikationsdaten zusammen mit den Kundendaten gespeichert werden.

## Beschreibung

Die Erfindung betrifft ein Verfahren zum automatischen Erstellen und Verarbeiten von Dokumenten, bei dem Dokumente mit Hilfe von Kundendaten automatisch personalisiert werden, bei dem Bonifikationsdaten automatisch auf den Dokumenten gespeichert werden, bei dem die Dokumente automatisch an Kunden versendet werden, und bei dem eingehende Dokumente automatisch erfasst werden, wobei die eingehenden Dokumente eingelöste Bonifikationen repräsentieren.

Die Bonifikationsdaten sind beispielsweise Rabattdaten, die Rabatte bezeichnen, welche Kunden einlösen können. Rabatte sind Gutschriften, die der Kunde erhält, wenn er ein bestimmtes Produkt erwirbt.

Bekannt ist, dass Rabattkarten von Kunden an bestimmten Points-of-Sale eingelöst werden und der Kunde den auf den Rabattkarten beschriebenen Rabatt sofort erhält. Ein Rabatt kann entweder eine Geldgutschrift oder eine Sachleistung sein.

Nachteilig an den bekannten Rabattverfahren ist, dass der Rabattanbieter keine Informationen über tatsächlich eingelöste Rabatte hat. Eine zentralisierte Verwaltung von Rabattaktionen und die Kontrolle über Rückläuferrabatte ist bei bekannten Verfahren nicht möglich.

Daher lag der Erfindung das technische Problem zugrunde, eine automatische Protokollierung von Rabattaktionen zu ermöglichen.

Das zuvor hergeleitete technische Problem wird erfindungsgemäß dadurch gelöst, dass die auf den Dokumenten gespeicherten Bonifikationsdaten automatisch erfasst werden, dass die erfassten Bonifikationsdaten den Kundendaten zugeordnet werden, und dass die Bonifikationsdaten zusammen mit den Kundendaten gespeichert werden.

Das Erfassen der auf den Dokumenten gespeicherten Bonifikationsdaten erfolgt automatisch. Dadurch wird eine reibungslose und schnelle Verarbeitung der Dokumente gewährleistet. Durch das Abspeichern und Zuordnen von Bonifikationsdaten zu Kundendaten wird es ermöglicht, einem Kunden Bonifikationen zuzuordnen, die dann kumuliert werden können.

Als Speichern der Daten auf dem Dokument kann jedes Bedrucken oder sonstiges Vereinzeln eines Dokuments verstanden werden.

Das erfindungsgemäße Verfahren zeichnet sich in einer vorteilhaften Ausgestaltung durch eine Kundendatenbank aus, wobei in der Kundendatenbank eine Vielzahl von Kundendaten gespeichert sind. Mit den Kundendaten verknüpft sind Datenfelder, mit deren Hilfe die Kunden genauer spezifiziert werden können. Diese Datenfelder enthalten beispielsweise Namen, Anschrift, Alter, Geschlecht, Hobby und Kaufverhalten der Kunden. Neben diesen Datenfeldern enthält die Kundendatenbank zumindest ein zusätzliches Datenfeld, mit dessen Hilfe Rabatte, die ein Kunde akkumuliert, diesem zugeordnet werden können. Die Kundendatenbank eignet sich zur Erstellung von Kundenprofilen.

Durch das automatische Erfassen von Kundendaten wird die Zuordnung von Bonifikation zu Kunde erleichtert.

Darüber hinaus lassen sich mit Hilfe der gespeicherten Kundendaten personalisierte Rabatt-Coupons erstellen. Diese personalisierten Rabatt-Coupons enthalten zum einen Informationen über den in Aussicht gestellten Rabatt und zum anderen über den angesprochenen Kunden. Eine Verschlüsselung der Daten auf dem Rabatt-Coupon ist ebenfalls möglich. Hierzu wird beispielsweise eine bekannte Data-Matrix verwendet. Eine Data-Matrix ist vorzugsweise ein zweidimensionales, punktcodiertes Datenfeld. Es ist unterteilt in schwarze und weiße Abschnitte, deren Position und Verhältnisse die gespeicherten Daten codiert wiedergeben. In der Data-Matrix können neben den Kundendaten noch zusätzliche Informationen über den Rabatt, den Vertriebsweg des Rabatt-Coupons, die Gültigkeit des Coupons und weitere Daten gespeichert sein.

Neben der automatischen Erstellung der Rabatt-Coupons ist es darüber hinaus möglich, die Rabattaktionen kundenspezifisch zu gestalten. Das bedeutet, dass Kunden mit bestimmten Merkmalen mit Rabattaktionen angesprochen werden können, die auf sie zugeschnitten sind. Solche Merkmale können aus den Datenfeldern der Kundendatenbank abgeleitet werden. Dieses sogenannte "Screening" kann optimiert werden, wenn erweiterte Informationen über einen Kunden zur Verfügung stehen, welche sich mit Hilfe von Rückläufer-Coupons des erfindungsgemäßen Verfahrens im Laufe der Zeit sammeln lassen.

Vorteilhafterweise lässt sich ein Rabatt-Coupon automatisch erstellen, wenn die Kundendatenbank in Verbindung mit einer Bonifikationsdatenbank gebracht wird. In einer solchen Bonifikationsdatenbank sind von Drittanbietern Informationen über Rabattaktionen abgelegt. Diese Informationen werden mit den Kundendaten verknüpft, woraufhin die Rabatt-Coupons automatisch erstellt werden können.

Nachdem die Rabatt-Coupons versendet worden sind, können diese von den Kunden an den entsprechenden Points-of-Sale eingelöst werden. Eingelöste Rabatt-Coupons werden dann an den Herausgeber zurück geschickt und dort elektronisch eingelesen, wobei aus den verschlüsselten Informationen die gewünschten Daten über die Art des Rabatts und den jeweiligen Kunden ermittelt werden.

Dabei ist es möglich, dass die Dokumente am Point-of-Sale mit einer Validierung, beispielsweise einem Stempel oder eine bestimmten Lochung, versehen werden. Diese Validierung ermöglicht es, Missbrauch zu verhindern. Auch ist es möglich, dass ein Dokument zur Einlösung einer Bonifikation bei mehr als einem Point-of-Sale validiert werden muss. Eine solche kombinierte Rabattaktion ermöglicht es, verschiedene Kaufinteressen bei einem Kunden zu wecken.

Anhand der eingelesenen Informationen lassen sich die von den Kunden eingelösten Rabatte den jeweiligen Kunden zuordnen und in der Kundendatenbank akkumulieren. Außerdem lassen sich anhand der eingelösten Rabatt-Coupons Informationen über das Kaufverhalten der Kunden gewinnen und, wie oben erwähnt, als erweiterte Information in der Kundendatenbank abspeichern.

Durch das Einlesen der Rabatt-Coupons kann dem Anbieter der Rabatte zusätzlich eine Information über beispielsweise den Vertriebskanal, der zu einer erfolgreichen Einlösung des Rabatt-Coupons geführt hat, den absoluten Rabattrückfluss oder das Kaufverhalten der angesprochenen Kunden gegeben werden. All diese Informationen, die von dem Rabattanbieter für ein effizientes Marketing notwendig sind, können in der Bonifikationsdatenbank abgespeichert werden. Der Rabattanbieter erhält damit ein zusätzliches Marketinginstrument.

Durch optische Erfassungsmittel, beispielsweise Scanner, lassen sich die eingehenden Dokumente schnell und verlässlich erfassen. Insbesondere, wenn die Daten in einer Data-Matrix codiert gespeichert sind.

Schließlich können Aktionen in Abhängigkeit vom akkumulierten Rabatt oder auch vom Kunden selbst ausgelöst werden. Diese Aktionen sind beispielsweise das erneute Erstellen eines personalisierten Rabatt-Coupons oder das automatische Überweisen von Geldbeträgen auf Kundenkonten. Dabei kann der Kunde zunächst seinen kumulierten Rabatt über Telekommunikationsmittel, beispielsweise Telefon oder Internet, abrufen und die Aktionen manuell auslösen. Auch kann eine Aktion bei einem Überschreiten eines Grenzwertes ausgelöst werden.

Das elektronische Übermitteln der Dokumente, beispielsweise über E-Mail, erlaubt eine kostengünstige Verteilung der Dokumente. Außerdem erlaubt die elektronische Verarbeitung eine Einbindung der Rabattaktionen in Datenverarbeitungssysteme unter Ausnutzung von bekannten Schnittstellen.

Weitere Vorteile ergeben sich aus den nachgeordneten Ansprüchen.

Die Erfindung wird im Folgenden anhand einer ein Ausführungsbeispiel zeigenden Zeichnung näher erläutert. In der Zeichnung zeigt:
- Fig. 1: ein erfindungsgemäßes Dokument;
- Fig. 2: einen Ablauf eines erfindungsgemäßen Verfahrens;
- Fig. 3: ein Verbuchen eines Rabattcoupons;
- Fig. 4: ein erfindungsgemäßes Einlösen von akkumulierten Rabatten;
- Fig. 5: ein Abrechnen von Rabattaktionen;
- Fig. 6: eine Nutzung der erfassten Daten für Aktionen.

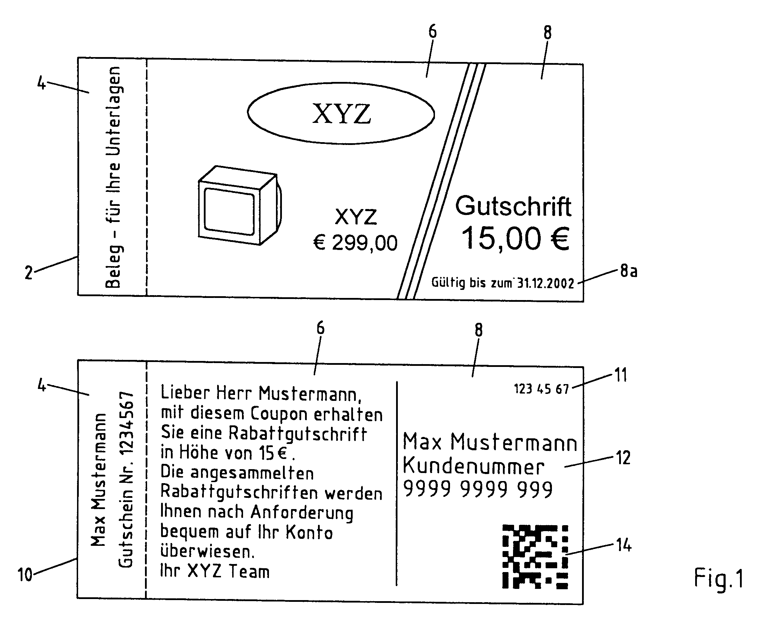

Fig. 1 zeigt eine Vorderseite 2 und eine Rückseite 10 eines Rabattcoupons. Die Gestaltung des Coupons ist nicht auf die dargestellte beschränkt. Es ist jedwede Anordnung der wesentlichen Elemente, Bonifikationsdaten und Kundendaten, auf dem Coupon denkbar.

Die Vorderseite 2 ist in drei Abschnitte 4, 6, 8 unterteilt. Der Abschnitt 4 ist ein abtrennbarer Beleg, den der Kunde vom Rabattcoupon abtrennen und zum Nachhalten der von ihm eingelösten Rabatte verwenden kann. Im Abschnitt 6 ist der Händler des Produktes sowie das Produkt, auf das ein Rabatt gewährt wird, im Klartext angegeben. Im ebenfalls abtrennbaren Abschnitt 8 ist der eingeräumte Rabatt im Klartext abgedruckt. Ebenfalls ist ein Gültigkeitsdatum 8a auf dem Abschnitt 8 abgedruckt.

Die Rückseite 10 des Rabattcoupons enthält im Abschnitt 4 eine den Rabatt individualisierende Rabattnummer 11, die ebenfalls auf dem Abschnitt 8 abgedruckt ist. Außerdem enthält der Abschnitt 4 eine persönliche Ansprache des angesprochenen Kunden. Auf der Rückseite des Abschnitts 6 ist ebenfalls eine personalisierte Ansprache an den Kunden abgedruckt, mit der er auf den eingeräumten Rabatt hingewiesen wird.

Die individuelle Gutscheinnummer 11 und die Kundendaten, insbesondere die Kundenanschrift und die Kundennummer 12, sind ebenfalls auf dem Abschnitt 8 im Klartext abgedruckt. Zusätzlich ist eine zweidimensionale Data-Matrix 14 auf der Rückseite des Abschnitts 8 abgedruckt. Die zweidimensionale Data-Matrix 14 enthält Informationen über den jeweiligen Rabattgutschein, insbesondere über das Produkt, welches rabattiert wird, den eingeräumten Rabatt, die Kundendaten des angesprochenen Kunden, den rabattierenden Händler, den Anbieter des Rabatts, den Vertriebsweg des Rabattcoupons und weitere. Die Data-Matrix 14 ist mit Hilfe automatischer, optischer Erfassungsmittel einlesbar. Dadurch kann sie auf eingehenden Coupons automatisch erfasst werden. Der Coupon lässt sich automatisch erstellen, wobei die Informationen aus einer Kundendatenbank und einer Bonifikationsdatenbank gewonnen und miteinander verknüpft werden.

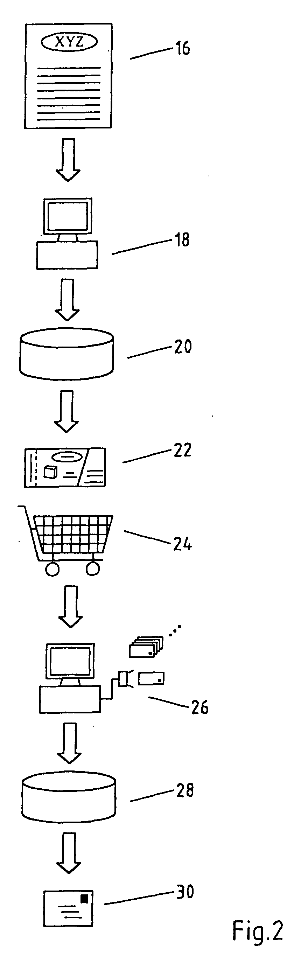

Fig. 2 zeigt den Ablauf eines erfindungsgemäßen Verfahrens. Zunächst meldet der Kunde sich bei dem Anbieter des erfindungsgemäßen Verfahrens an 16. Hierbei gibt er seine Stammdaten, wie Anschrift und Name sowie Zusatzinformationen, wie Alter und Hobbys, an. Die Stammdaten werden in einer Kundendatenbank 18 gespeichert 18. Nachdem die Stammdaten gespeichert worden sind, erhält der Kunde eine individuelle Kundennummer und ein Kundenkonto 20. Das Kundenkonto 20 ist ein Datenfeld in der Kundendatenbank 18, in dem eingelöste Rabatte akkumuliert werden können.

Die Kundendatenbank 18 ist mit einer Rabattdatenbank verbunden (nicht dargestellt). Anhand der Kundeninformationen werden mit zeitlichen Abständen Rabattcoupons 22 an die Kunden verschickt. Hierbei werden die in Fig. 1 gezeigten personalisierten Rabattcoupons verwendet.

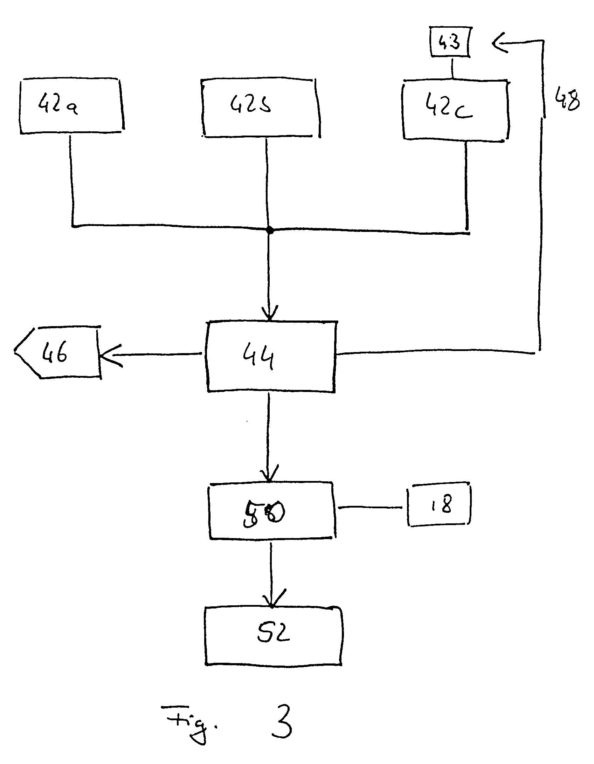

Der Kunde kann die an ihn gerichteten Coupons einlösen, wenn er das rabattierte Produkt bei dem aus dem Coupon bezeichneten Händler kauft 24. Er zahlt dabei jedoch den vollen Kaufpreis. Der Rabattcoupon wird durch den Händler validiert. Der Händler oder der Kunde schickt darauf hin den Coupon an die Zentrale zurück. Dort wird der Coupon automatisch erfasst 26. Mit Hilfe der automatischen Erfassung 26 können sowohl die Rabattgutschrift als auch weitere auf dem Coupon gespeicherte Informationen erfasst werden und in der Kundendatenbank 18 gespeichert werden 28. Der Kunde kann Informationen über seinen Kontostand selbständig abrufen oder die Informationen werden ihm zugeschickt 30. Ein solche Abrufen ist in Fig. 3 dargestellt.

Figur 3 zeigt ein Verbuchen eines Rabattcoupons, bzw. eines Rabattes. Eingehende Rabatte werden im Schritt 42 erfasst. Rabattcoupons mit Data-Matrix oder in sonstiger Weise elektronisch lesbar, werden automatisch erfasst 42a, wobei die Kundendaten und die Rabattdaten erfasst werden. Rabattcoupons, die nicht elektronisch lesbar sind, werden manuell erfasst 42b. Darüber hinaus können über eine EDV Schnittstelle Rabatte erfasst werden 42c, die bspw. im Zusammenhang mit Abonnements anfallen.

Im Schritt 44 werden die erfassten Coupons überprüft. Hierbei werden Gültigkeit, Echtheit, Entwertung und eventueller Missbrauch überprüft. Treten bei der Überprüfung Unregelmäßigkeiten auf, so wird der Kunde hierüber informiert 46. Bestellkarten, bspw. für Abonnements, werden im Schritt 48, nachdem die Coupons verbucht wurden, an den Abonnementsversand 43 weitergeleitet.

Nachdem die Überprüfung im Schritt 44 erfolgreich war, werden die Rabatte auf dem Kundenkonto 20 in der Kundendatenbank 18 gutgeschrieben. Anschließend werden die Coupons noch zu Zwecken der Abrechnung, Revision und Reklamation archiviert 52.

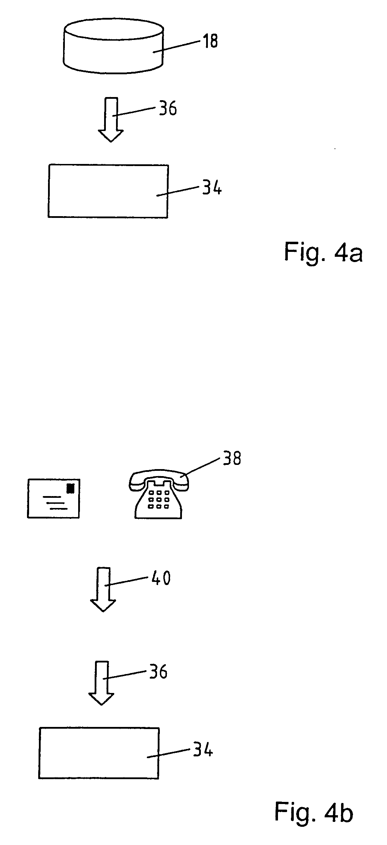

Fig. 4a zeigt, dass die Datenbank 32 in regelmäßigen Abständen automatisch abgefragt werden kann. Bei einem Überschreiten eines Limits, welches vorher festgelegt werden kann, wird dann ein Rabatt an den Kunden, bzw. sein Bankkonto 34, automatisch überwiesen. Dabei wird der Auszahlungsvorgang automatisch ausgelöst 36.

Es ist ebenfalls möglich, wie in Fig. 3b dargestellt, dass der Kunde über Telekommunikationsmittel 38 seinen Kontostand abfragen kann 40 und die Rabattgutschrift anfordern kann. Auf Anforderung wird dann ebenfalls automatisch eine Überweisung 36 auf das Bankkonto 34 des Kunden ausgelöst.

Der Kunde erhält automatisch, vorzugsweise in regelmäßigen Abständen, bspw. viertel-, halb oder ganzjährig, Kontoauszüge, die mit Newslettern, die über aktuelle Aktionen informieren, ergänzt sind. Hierzu werden Kundendaten aus der Kundendatenbank 18 geladen. Daneben wird die Kommunikationsfrequenz ermittelt und festgestellt, ob der Kunde einen Kontoauszug erhalten soll. Zusätzlich werden zu den Kunden, die einen Kontoauszug erhalten sollen, aus der Kundendatenbank 18 Zustellinformationen ermittelt, um eine Porto-Optimierung durchführen zu können. Nachdem der Kontoauszug erstellt worden ist, wird dieser, zusammen mit optionalen Beilagen, wie Prämienkatalogen, Werbepartnerbeilagen und neuen Rabattcoupons, an den Kunden verschickt.

Die Auszahlung von Guthaben erfolgt derart, dass aus der Kundendatenbank 18 von einem Kundenkonto 20 die Kundendaten derjenigen Kunden ermittelt werden, die eine Auszahlung erhalten. Anhand der Kundendaten wird ein Scheck ausgestellt oder eine Bankanweisung ausgelöst. Zusammen mit dem Scheck können wiederum optionale Beilagen versendet werden. Auch ist es möglich, den Scheck zusammen mit dem Kontoauszug zu versenden. Nach der Scheckeinlösung wird dieser verbucht und der Betrag vom Guthaben des jeweiligen Kunden abgezogen.

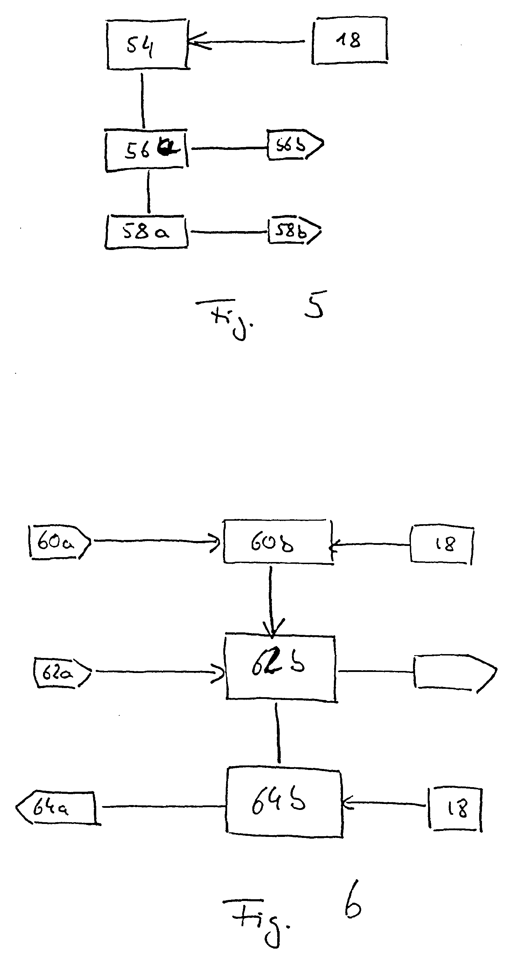

Figur 5 zeigt eine Abrechnung zwischen der Service Zentrale und einem Rabattanbieter. Um dem Rabattanbieter Informationen zu den laufenden Rabattaktionen mitteilen zu können, werden die Daten der an den jeweiligen Rabattaktionen teilnehmenden Kunden aus einem Kundenkonto 20 der Kundendatenbank 18 ausgelesen 54. Mit Hilfe der ermittelten Kundendaten werden die von den Kunden in Anspruch genommenen Rabatte ermittelt. Anhand dieser Daten wird ein Report erstellt 56a und an den Rabattanbieter übermittelt 56b. Der Report umfasst Informationen zu allen von den Kunden eingelösten Rabatten sowie die dafür angefallenen Provisionen für den Dienstanbieter. Neben diesen Daten können die Reporte noch Statistiken zu Kundenverhalten und Rabattrückläufe und weitere marktspezifische Daten enthalten.

In regelmäßigen Abständen werden die eingelösten Rabatte mit den Rabattanbietern abgerechnet 58a, wobei neben den eigentlichen Gutschriften für die von den Kunden eingelösten Rabatte noch Provisionen abgerechnet werden. Diese Abrechnungen werden bspw. monatlich, viertel-, halb- oder ganzjährig an den Rabattanbieter übermittelt 58b.

Figur 6 zeigt schließlich die Verwendung der gesammelten Kundendaten für Marketingaktionen oder neue Rabattaktionen. Durch den Rabattanbieter werden Vorgaben für Marketingaktionen gemacht 60a. Hierbei bestimmt er spezielle Kundenprofile, denen die Aktionen zugänglich gemacht werden sollen. Mit Hilfe der Vorgaben werden aus der Kundendatenbank 18 die entsprechenden Kundendaten ermittelt 60b. Für diese Kunden werden Marketingaktionen konzipiert, wie beispielsweise Briefansprache, Email, SMS, iMode, für Einladungen, Prämienkataloge, Produktankündigungen, Promotionen, Rabattcoupons, Abo-Angebote und weitere 62a. Die entwickelten Aktionen werden durch den Rabattanbieter mit Inhalten gefüllt 62a, z.B. legt der Rabattanbieter die Aktion im einzelnen fest und bestimmt die Art der zu vergebenden Rabatte.

Nachdem die Marketingaktion gestartet worden ist, wird das Feedback der angesprochenen Kunden durch Abfrage nach Rückläufercoupons in der Kundendatenbank 18 ermittelt 64b. Die gewonnen Informationen über die Wirkung der Aktion werden an den Rabattanbieter weiter geleitet 64a.

## Patentansprüche

1. Verfahren zum automatischen Erstellen und Verarbeiten von Dokumenten,
- bei dem Dokumente mit Hilfe von Kundendaten automatisch personalisiert werden,
- bei dem Bonifikationsdaten automatisch auf den Dokumenten gespeichert werden,
- bei dem die Dokumente automatisch an Kunden versendet werden, und
- bei dem eingehende Dokumente automatisch erfasst werden,
- wobei die eingehenden Dokumente eingelöste Bonifikationen repräsentieren,
**dadurch gekennzeichnet,**
- **dass** die auf den Dokumenten gespeicherten Bonifikationsdaten automatisch erfasst werden,
- **dass** die erfassten Bonifikationsdaten den Kundendaten zugeordnet werden, und
- **dass** die Bonifikationsdaten zusammen mit den Kundendaten gespeichert werden.

2. Verfahren nach Anspruch 1, **dadurch gekennzeichnet, dass** die Kundendaten in einer Kundendatenbank gespeichert und Kundenprofile erstellt werden.

3. Verfahren nach Anspruch 2, **dadurch gekennzeichnet, dass** die Kundendaten mit Hilfe der Kundendatenbank gelesen werden und dass die gelesenen Kundendaten auf den Dokumenten gespeichert werden.

4. Verfahren nach einem der Ansprüche 1 bis 3, **dadurch gekennzeichnet, dass** die auf den Dokumenten gespeicherten Kundendaten automatisch erfasst werden.

5. Verfahren nach einem der Ansprüche 1 bis 4, **dadurch gekennzeichnet, dass** die Dokumente mit Hilfe codierter und/oder uncodierter Kundendaten personalisiert werden.

6. Verfahren nach einem der vorhergehenden Ansprüche, **dadurch gekennzeichnet, dass** die in den Kundendaten gespeicherten Kundenprofile mit Hilfe der eingegangenen Dokumente ergänzt werden, wobei das Kaufverhalten eines Kunden durch die eingehenden Dokumente automatisch erfasst wird.

7. Verfahren nach einem der Ansprüche 1 bis 6, **dadurch gekennzeichnet, dass** die Bonifikationsdaten in einer Bonifikationsdatenbank gespeichert werden.

8. Verfahren nach einem der Ansprüche 1 bis 7, **dadurch gekennzeichnet, dass** die Dokumente bei einem Einlösen der Bonifikation zurück geschickt werden.

9. Verfahren nach einem der Ansprüche 1 bis 7, **dadurch gekennzeichnet, dass** die Dokumente bei einem Einlösen der Bonifikation mit zumindest einer Validierung versehen werden.

10. Verfahren nach einem der Ansprüche 1 bis 9, **dadurch gekennzeichnet, dass** die auf den Dokumenten gespeicherten Bonifikationsdaten mit Hilfe einer Codierung und/oder im Klartext gespeichert werden.

11. Verfahren nach einem der Ansprüche 1 bis 10, **dadurch gekennzeichnet, dass** die Kundendaten und/oder Bonifikationsdaten mit Hilfe einer zweidimensionalen Datenmatrix und/oder eines Strichcodes codiert werden.

12. Verfahren nach einem der vorhergehenden Ansprüche, **dadurch gekennzeichnet, dass** die Dokumente zumindest zwei Abschnitte aufweisen, wobei die Kundendaten und/oder die Bonifikationsdaten auf zumindest einem ersten Abschnitt codiert gespeichert werden, und wobei die Kundendaten und/oder die Bonifikationsdaten auf zumindest einem zweiten Abschnitt uncodiert gespeichert werden.

13. Verfahren nach einem der vorhergehenden Ansprüche, **dadurch gekennzeichnet, dass** die Bonifikationsdaten auf den Dokumenten in Abhängigkeit von den gespeicherten Kundenprofilen selektiv gespeichert werden.

14. Verfahren nach einem der vorhergehenden Ansprüche, **dadurch gekennzeichnet, dass** mit Hilfe optischer Erfassungsmittel die codierten Kundendaten und/oder Bonifikationsdaten erfasst werden.

15. Verfahren nach einem der Ansprüche 1 bis 14, **dadurch gekennzeichnet, dass** die einem Kunden zugeordneten Bonifikationen zum Abrufen mit Hilfe von Telekommunikationsmitteln zur Verfügung gestellt werden.

16. Verfahren nach einem der Ansprüche 1 bis 15, **dadurch gekennzeichnet, dass** zumindest ein Grenzwert festgelegt wird und dass beim Übersteigen des Grenzwertes durch die einem Kunden zugeordneten, akkumulierten Bonifikationen eine Aktion ausgelöst wird.

17. Verfahren nach einem der vorhergehenden Ansprüche, **dadurch gekennzeichnet, dass** das Dokument elektronisch ist und zumindest teilweise elektronisch an einen Kunden übermittelt wird.

18. Verfahren nach Anspruch 11, **dadurch gekennzeichnet, dass** das Dokument kundenseitig gedruckt wird.

19. Verfahren nach einem der Ansprüche 1 bis 18, **dadurch gekennzeichnet, dass** das Dokument nach dem Einlösen einer Bonifikation zumindest teilweise elektronisch zurück geschickt wird.
